# FASCICULE DE BREVET EUROPEEN

(11) **EP 1 295 249 B1**
(45) Date de publication et mention de la délivrance du brevet: **03.12.2008**
(21) Numéro de dépôt: 01949523.3
(22) Date de dépôt: 26.06.2001
(51) Int. Cl.: G06K 19/077

(54) **OBJET PORTABLE SANS CONTACT COMPORTANT UN OU PLUSIEURS DISPOSITIFS PERIPHERIQUES SANS CONTACT**
TRAGBARES KONTAKTLOSES OBJEKT MIT EINER ODER MEHREREN KONTAKTLOSEN SCHNITTSTELLEN
CONTACT-FREE PORTABLE OBJECT COMPRISING ONE OR SEVERAL CONTACT-FREE PERIPHERAL DEVICES

(30) Priorité: 29.06.2000 FR 0008439
(43) Date de publication de la demande: 26.03.2003
(73) Titulaire: ASK S.A., 06560 Valbonne (FR)
(72) Inventeur: PARRAULT, Olivier, F-06220 Golfe Juan (FR)
(86) Numéro de dépôt international: PCT/FR2001/002011
(87) Numéro de publication internationale: WO 2002/001497

(56) Documents cités:
- WO-A-96/03713
- FR-A- 2 615 984
- US-A- 5 198 647

## Description

### Domaine technique

La présente invention concerne les objets portables et plus particulièrement un objet portable sans contact comprenant au moins un périphérique sans contact ohmique avec la puce principale.

### Etat de la technique

Les objets portables, tels que les cartes à puce sans contact, sont largement utilisés de nos jours dans de nombreuses applications. Il s'agit généralement de cartes au format ISO qui sont couplées à des lecteurs, par lesquels elles sont téléalimentées, c'est à dire par lesquels elles reçoivent l'énergie sous forme de champ magnétique et avec lesquels elles communiquent. Dans les secteurs des transports publics, de tels moyens ont également été mis en oeuvre sous forme de cartes ISO ou sous forme plus réduite comme des tickets. Les cartes d'abonnement sont présentées par les usagers devant des lecteurs afin d'accéder au transport en commun. La communication qui s'établit entre la carte et le lecteur permet la reconnaissance de l'usager et le débit du voyage sur le compte de ce dernier.

Ces moyens ont aussi été développés comme moyen de paiement. C'est le cas par exemple du porte-monnaie électronique. Ce dernier sert à payer de petites sommes auprès des commerçants. Il est constitué par une carte à puce. Cette carte est créditée dans un distributeur spécialisé. L'utilisateur peut alors l'utiliser pour payer les achats, en la présentant devant un lecteur. La communication entre la carte et le lecteur entraîne le débit de la somme correspondant à l'achat.

De nombreuses sociétés ont également développé des moyens d'identification de leur personnel par carte à puce sans contact. Le passage devant un lecteur permet d'identifier le possesseur de la carte qui est alors autorisé ou non à accéder à une zone contrôlée. La même carte peut également être utilisée par les employés pour « pointer ».

Le recours de plus en plus systématique à la technologie des cartes à puce fait naître de nouveaux besoins.

Le premier de ces besoins est la possibilité de prendre connaissance d'informations directement sur l'objet portable sans contact. En effet, l'utilisateur veut pouvoir prendre connaissance d'informations contenues dans la puce de la carte et ceci sans être obligé de venir placer la carte dans le champ d'un lecteur et lire les informations directement sur l'écran du lecteur. En effet, on retrouve cette contrainte dans l'utilisation du porte-monnaie électronique. L'utilisateur ne peut prendre connaissance du solde que lorsqu'il recharge la carte en argent ou lorsqu'il effectue une transaction, c'est à dire lorsque la carte est alimentée grâce au champ magnétique émis par un lecteur.

Il existe sur le marché un moyen de pallier ces inconvénients. Ce moyen est un étui pour porte-monnaie électronique qui possède un écran permettant de consulter le solde de la carte à tout moment. En glissant cette dernière à l'intérieur de l'étui, un contact s'établit entre la puce de la carte et celle de l'étui. La communication par contact entraîné l'affichage du solde sur l'écran de l'étui. Cependant, cette technologie présente plusieurs inconvénients. Le premier de ces inconvénients est que l'étui nécessite une source d'alimentation interne permettant le fonctionnement de l'étui et la communication entre la carte et l'étui. Cette source d'alimentation est généralement une pile. Il faut donc régulièrement changer cette pile lorsqu'elle est usée. Le deuxième inconvénient réside dans le fait que l'étui n'accepte que les cartes qui sont configurées pour fonctionner avec lui. Ainsi, on ne peut pas utiliser plusieurs cartes différentes.

Un deuxième besoin est la possibilité d'utiliser une même carte dans plusieurs applications différentes. En effet, on peut imaginer qu'une carte puisse communiquer avec des lecteurs différents. Ainsi, une carte peut être susceptible de fonctionner avec des systèmes différents. En effet, une carte de crédit fonctionnant dans les distributeurs automatiques de billets peut être utilisée comme porte-monnaie électronique. De même, une carte de transport sans contact peut être utilisée pour payer des petites sommes. La même carte devient alors un accessoire qui peut être utilisé quotidiennement dans plusieurs applications différentes.

Un troisième besoin peut être de disposer sur la carte sans contact d'un petit clavier permettant de saisir des données lors d'une transaction entre la carte et un terminal. Un tel clavier serait disposé sur le corps de la carte à puce.

Les cartes actuellement sur le marché ne disposent que d'une puce principale ne permettant que de communiquer qu'avec un seul type de système.

De plus, ces fonctions secondaires nécessitent une source d'énergie pour fonctionner lorsque la carte est dans le champ magnétique émis par le lecteur avec lequel elle communique.

Enfin, l'utilisation de périphériques pour réaliser ces fonctions peut entraîner une perturbation dans le fonctionnement de la puce principale et notamment lors de la communication entre cette dernière et son lecteur associé.

Cependant, le document WO-A-96/03713 décrit un objet portable sans contact comprenant une puce principale et une antenne principale permettant la communication entre la puce et un lecteur associé, et comprenant en outre un dispositif périphérique sans contact ayant une fonction différente de la puce principale, non relié par contact ohmique à cette dernière.

### Exposé de l'invention

Le but de l'invention est de pallier ces inconvénients en fournissant un objet portable possédant plusieurs fonctions indépendantes, pouvant communiquer avec plusieurs systèmes différents, grâce à un ou plusieurs périphériques indépendants, ces périphériques ne nécessitant pour leur fonctionnement qu'une faible consommation d'énergie et n'ayant qu'une influence réduite sur le fonctionnement de la puce principale.

La présente invention concerne un objet portable sans contact comprenant une puce principale et une antenne principale permettant la communication entre la puce et un lecteur associé à l'objet portable sans contact, et comprenant en outre au moins un dispositif périphérique sans contact ayant une fonction différente de la puce principale, non relié par contact ohmique à cette dernière. Le dispositif périphérique sans contact reçoit de l'énergie et des données au moyen d'un enroulement plan jouant le rôle du secondaire d'un transformateur dont le primaire est constitué par l'antenne principale, lorsque cette dernière reçoit l'énergie et des données en provenance d'un lecteur de l'objet portable, par couplage électromagnétique.

Selon un mode de réalisation particulier, l'invention concerne une carte à puce sans contact comportant une puce secondaire indépendante de la puce principale et communiquant avec un lecteur différent de celui de la puce principale.

### Description brève des figures

Les buts, objets et caractéristiques de l'invention ressortiront mieux à la lecture de la description qui suit faite en référence aux dessins joints dans lesquels :
La figure 1 représente un objet portable sans contact comportant une pluralité de dispositifs périphériques.
La figure 2 représente un objet portable sans contact comportant une puce secondaire et un périphérique d'affichage.
La figure 3 représente le schéma électrique d'une carte à puce sans contact.
La figure 4 représente le schéma électrique d'un dispositif périphérique.

### Description détaillée de l'invention

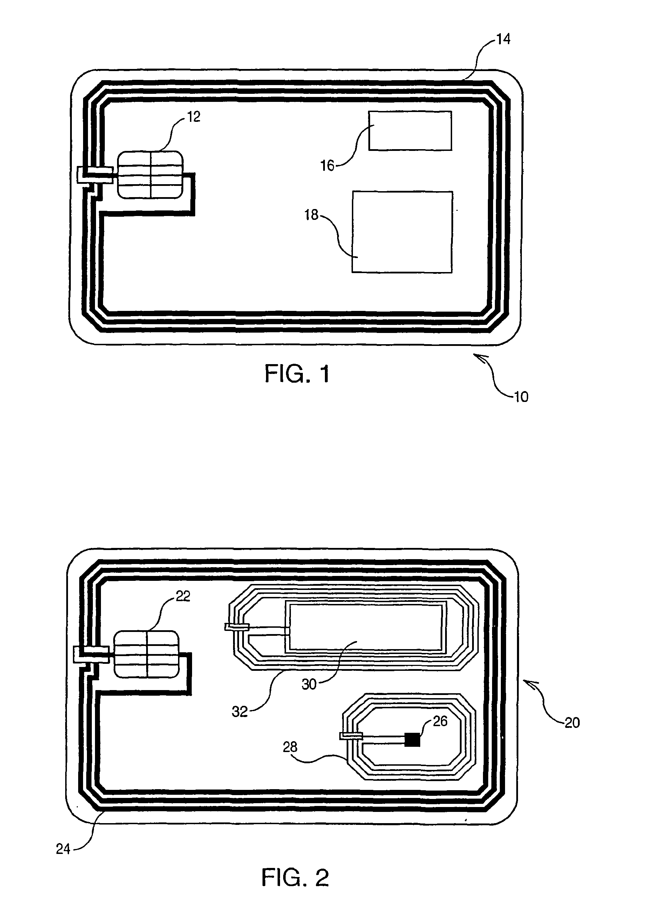

La figure 1 représente une carte à puce sans contact au format ISO. La carte 10 comprend une puce principale 12. Cette puce dialogue avec un lecteur par l'intermédiaire d'une antenne principale 14. En effet, lorsque la carte est placée dans le champ magnétique généré par le lecteur, il y a couplage électromagnétique entre la puce 12 et le lecteur. Les données et l'énergie transitent alors entre la puce et le lecteur par l'intermédiaire de leur antenne respective. L'antenne principale 14 est constituée de spires de circonférences croissantes. Chacune des extrémités de cette antenne est reliée à la puce 12. La carte à puce 10 comprend également deux dispositifs périphériques 16 et 18. Ces dispositifs périphériques peuvent être de même nature ou de nature différentes. Ils ne sont pas reliés électriquement à la puce principale et sont indépendants l'un de l'autre. Selon d'autres modes de réalisation, la carte peut comporter un seul dispositif périphériques ou plus de deux, en fonction des besoins.

La figure 2 représente un exemple de carte à puce au format ISO comportant deux périphériques de nature différente. La carte à puce 20 comprend une puce principale 22 reliée à une antenne principale 24. Cette carte comprend également une puce secondaire 26 reliée à un enroulement plan 28. Elle comprend en plus un dispositif périphérique d'affichage constitué d'une puce (non visible), d'un écran 30 et d'un enroulement plan 32 permettant au dispositif périphérique d'affichage de recevoir des données et de l'énergie dont l'origine est le lecteur ou la puce principale.

La taille de l'enroulement plan varie en fonction des spécificités du périphérique auquel il est relié. Ainsi, on constate que l'enroulement plan 28 est de plus petite taille que l'enroulement plan 32. De plus, la taille dépend également des spécificités de la carte avec laquelle fonctionne le périphérique. Quel que soit le périphérique, on constate qu'il ne présente pas de liaison électrique filaire directe ni avec la puce principale 22, ni avec son antenne 24.

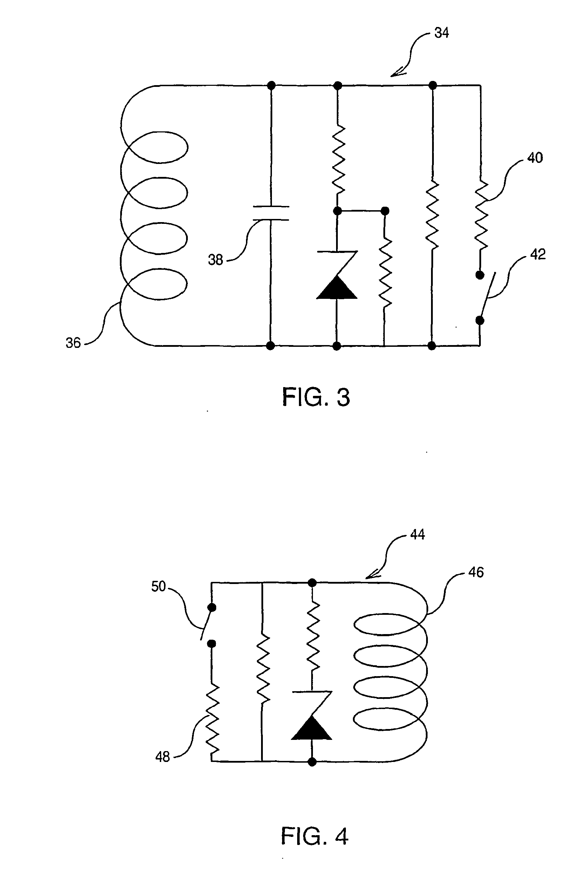

La figure 3 représente le schéma électrique d'une carte à puce sans contact 34. Le circuit électrique la constituant comprend l'antenne principale 36 ou antenne de couplage, au moins un condensateur 38 et plusieurs résistances, dont au moins une résistance 40, et un commutateur électronique 42. Le condensateur 40 a pour rôle de fournir une capacité d'accord permettant à la carte à puce sans contact d'entrer en résonance avec le lecteur lorsqu'elle est placée dans le champ magnétique produit par celui-ci. La fréquence a laquelle la résonance se produit, c'est à dire la fréquence à laquelle le circuit de la carte à puce et celui du lecteur sont accordés, est égale à 13,56 mégahertz (MHz) selon la norme actuelle. La résistance 40 peut être commutée par l'intermédiaire d'un commutateur électronique 42 à l'intérieur de la puce, afin de générer une fréquence sous-porteuse de rétromodulation entre la carte à puce et le lecteur. Selon un exemple particulier qui correspond à la norme actuelle, la fréquence sous-porteuse de rétromodulation est de 847 kilohertz (kHz). Cette fréquence sous-porteuse de rétromodulation permet à la carte à puce d'envoyer des informations vers le lecteur.

La figure 4 représente le schéma électrique d'un dispositif périphérique 44. Ce dernier comprend un enroulement plan 46, plusieurs résistances modélisant les charges dont une résistance 48 et un commutateur électronique 50. Le circuit du dispositif périphérique 44 ne présente pas de capacité d'accord. Il ne peut donc fonctionner de manière autonome avec un rendement exploitable à partir de l'énergie transmise par le lecteur. Il doit donc utiliser, par couplage avec le circuit d'antenne principal, la surtension liée à l'accord entre la carte sans contact et son lecteur. Le principe est donc d'utiliser le circuit principal accordé de la carte à puce sans contact comme le primaire d'un transformateur. L'enroulement plan 46 du dispositif périphérique constitue alors le secondaire de ce transformateur et reçoit l'énergie et les données par couplage électromagnétique. La résistance 48, commutée grâce 50, permet de modifier l'impédance du circuit afin de générer une fréquence sous-porteuse de rétromodulation. En effet, selon un mode particulier de fonctionnement, on peut faire varier l'impédance du dispositif périphérique afin de transmettre une réponse vers le lecteur par rétromodulation.

Comme dans le cas de tout transformateur, l'impédance présentée par l'électronique du dispositif périphérique peut être rapportée en parallèle à l'impédance présentée de la puce sur l'antenne principale de la carte sans contact, en fonction d'une mutuelle de couplage m entre l'antenne principale et l'enroulement plan et du rapport n1/n2, n1 étant le nombre de spires de l'antenne principale de la carte sans contact et n2 le nombre de spires de l'antenne du dispositif périphérique.

Si le dispositif périphérique présente une impédance forte ainsi qu'une très faible capacité parasite avant le redresseur, il peut être alimenté lorsque la carte sans contact est présente dans le champ magnétique du lecteur, et ceci sans dégrader de façon significative le fonctionnement de cette dernière.

Selon un mode de fonctionnement du dispositif périphérique, ce dernier exploite les données fournies par la puce de la carte sans contact sous forme d'une instruction spécifique émise par l'antenne principale. Cette instruction est générée une fois effectuée la transaction entre la carte sans contact et le lecteur.

Selon un autre mode de fonctionnement dudit dispositif périphérique, ce dernier peut exploiter des données émises par le lecteur en même temps que l'énergie et transmises en modulation d'amplitude vers la carte sans contact puis transmises par l'antenne principale de celle-ci.

Selon un mode de réalisation particulier, le circuit du dispositif périphérique comporte un condensateur contribuant à l'accord global. Cette capacité peut alors se cumuler avec la capacité d'accord de la puce principale afin de donner une capacité de couplage globale permettant aux circuits de la puce principale, du dispositif périphérique et du lecteur d'être accordés à la fréquence de travail du lecteur. Si plusieurs dispositifs périphériques sont placés sur la carte à puce sans contact, les capacités des dispositifs périphériques et de la puce principale se cumulent afin de fournir la capacité d'accord global. La capacité d'accord du périphérique est généralement plus faible que celle de la puce principale de telle sorte que la capacité globale est répartie à 75 % sur la capacité de la puce principale et à 25 % sur la capacité du dispositif périphérique. La capacité d'accord globale dépend également de la mutuelle de couplage et est liée au nombre de tours de l'antenne principale et des antennes des dispositifs périphériques.

Le dispositif périphérique peut fonctionner avec le même lecteur que la puce principale à une fréquence identique à celle de la puce principale.

Le dispositif périphérique peut fonctionner avec un lecteur spécifique à la même fréquence que celle de la puce principale.

Afin d'obtenir une fréquence de couplage globale de 13,56 MHz, la fréquence de résonance propre des différents circuits présents sur la carte est nécessairement plus élevée que la fréquence de travail.

Selon un autre mode réalisation, le dispositif périphérique présente une capacité d'accord lui permettant d'être couplé directement avec un lecteur spécifique. Dans ce cas, la fréquence de couplage est différente et plus élevée que celle de la puce principale.

Les dispositifs périphériques peuvent être de différentes sortes. Selon un premier mode de réalisation, ce dispositif est une puce secondaire ayant des instructions propres. Cette puce peut dialoguer avec le même lecteur que la puce principale ou avec un lecteur spécifique.

Selon un deuxième mode de réalisation, le dispositif périphérique peut être un dispositif d'affichage tel que représenté à la figure 2. Ce dispositif affiche les informations issues du dialogue entre la puce principale et le lecteur. Ce dispositif d'affichage peut notamment afficher la somme d'argent restant sur la carte à puce sans contact, si cette dernière est un porte-monnaie électronique. Il peut également afficher des informations liées au fonctionnement de la carte. Selon un mode de réalisation particulier, l'affichage est rendu rémanent, ce qui permet à l'utilisateur de prendre connaissance des informations à tout moment, entre deux transactions.

Selon un troisième mode de réalisation, le dispositif périphérique est un clavier. Il s'agit préférentiellement d'un clavier numérique. Cette fonction peut être particulièrement intéressante dans l'application de la carte à puce sans contact comme porte-monnaie électronique. En effet, un tel dispositif peut être utilisé pour saisir la somme d'argent que l'on veut charger sur dans le porte-monnaie électronique à partir d'un distributeur. Un tel clavier peut être également utilisé pour saisir un code d'accès. Le fonctionnement de ce type de périphérique nécessite que l'objet sans contact reste présent dans le champ du lecteur lors de la saisie.

Le dispositif périphérique fonctionnant sans contact ohmique, peut être intégré à l'objet portable sans contact lors de sa fabrication, l'enroulement plan du dispositif périphérique est alors dans le même plan que l'antenne principale.

Selon un autre mode de réalisation, le dispositif périphérique peut être rapporté à l'objet portable une fois celui-ci fabriqué. Dans ce cas, le dispositif périphérique est dissociable de l'objet portable.

Dans le cas où le dispositif périphérique est dissociable, la réception des données et de l'énergie par ce dernier ne peut avoir lieu qu'à proximité de l'objet portable et lorsque celui-ci est placé dans le champ magnétique émis par le lecteur. De même, pour pouvoir émettre une réponse en rétromodulation, le dispositif périphérique doit être placé à proximité de l'objet portable sans contact.

En résumé, chacun des dispositifs périphériques constituant est indépendant et n'es pas connecté à la puce principale de l'objet portable sans contact, et n'a donc d'incidence ni sur le fonctionnement de la puce principale, ni sur le fonctionnement des autres dispositifs périphériques de l'objet portable, ni sur les transactions qui sont réalisées entre la puce principale, les autres dispositifs périphériques et leurs lecteurs. Ainsi, dans le cas où un dispositif périphérique est indépendant physiquement de l'objet portable sans contact, un dysfonctionnement de celui-ci n'a pas d'influence sur la fonctionnalité des autres éléments de l'objet portable sans contact, que ce soit la puce principale ou les autres dispositifs périphériques. L'utilisateur peut donc toujours se servir des fonctions de la puce principale et des autres dispositifs périphériques éventuellement se trouvant sur la carte. En ce qui concerne le dispositif défaillant, si celui-ci est rapporté sur l'objet portable sans contact, il peut être changé au profit d'un nouveau dispositif périphérique.

## Revendications

1. Objet portable sans contact (10) comprenant une puce principale (12) et une antenne principale (14) permettant la communication entre ladite puce et un lecteur associé audit objet portable sans contact, et comprenant en outre au moins un dispositif périphérique sans contact (16, 18) ayant une fonction différente de ladite puce principale, non relié par contact ohmique à cette dernière;
ledit objet portable étant **caractérisé en ce que** ledit dispositif périphérique sans contact reçoit de l'énergie et des données au moyen d'un enroulement plan (28, 32) jouant le rôle du secondaire d'un transformateur dont le primaire est constitué par ladite antenne principale, lorsque cette dernière reçoit l'énergie et des données en provenance d'un lecteur dudit objet portable, par couplage électromagnétique.

2. Objet portable (10) selon la revendication 1, dans lequel lesdites données transmises par ladite antenne principale (14) sont générées par la puce principale (12) dudit objet portable.

3. Objet portable (10) selon la revendication 1 ou 2, dans lequel ledit dispositif périphérique comprend une capacité d'accord (38) permettant de coupler ledit dispositif périphérique à un lecteur.

4. Objet portable (10) selon la revendication 3, dans lequel le couplage du dispositif se fait par combinaison des capacités d'accord dudit dispositif périphérique et de ladite puce principale (12).

5. Objet portable (10) selon l'une des revendications 1 à 4, **caractérisé en ce que** ledit dispositif périphérique sans contact est un dispositif d'affichage (30).

6. Objet portable (10) selon l'une des revendications 1 à 4, **caractérisé en ce que** ledit dispositif périphérique sans contact est une puce secondaire (26).

7. Objet portable (10) selon l'une des revendications 1 à 4, **caractérisé en ce que** ledit dispositif périphérique sans contact est un clavier.

8. Objet portable (10) selon l'une des revendications précédentes, dans lequel ledit dispositif périphérique peut envoyer une réponse audit lecteur d'objet portable par rétromodulation, par l'intermédiaire dudit enroulement plan (46), couplé à l'antenne principale (14) dudit objet portable.

9. Objet portable (10) selon l'une des revendications précédentes, dans lequel ledit dispositif périphérique est intégré audit objet portable, ledit enroulement plan étant dans le même plan que ladite antenne principale (14) dudit objet portable.

10. Objet portable (10) selon l'une des revendications 1 à 9, dans lequel ledit dispositif périphérique est dissociable dudit objet portable.

## Claims

1. A contactless portable object (10) featuring a main chip (12) and a main antenna (14) enabling communication between said chip and a reader associated with said contactless portable object, comprising at least one contactless peripheral device (16, 18) having a function different than that of the main chip, not connected by ohmic contact to the latter;
said portable contactless object being **characterized in** said peripheral device receives energy and data by a flat coil (28,32) playing the role of a transformer secondary, the primary of which is formed by said main antenna, when the latter receives energy and data from a reader of said portable object through electromagnetic coupling.

2. The portable object (10) according to claim 1, in which said data transmitted by said main antenna are generated by the main chip of said portable object.

3. The portable object (10) according to claim 1 or 2, in which said peripheral device includes a tuning capacitor (38) enabling said device to be coupled to a reader.

4. The portable object (10) according to the claim 3, in which the coupling of the device is obtained by combining tuning capacitors of said device and that of said main chip (12).

5. The portable object (10) according to any one of claims 1 to 4, **characterized in that** said contactless peripheral device is a display device.

6. The portable object (10) according to any one of claims 1 to 4, **characterized in that** said contactless peripheral device is a secondary chip (26).

7. The portable object (10) according to any one of claims 1 to 4, **characterized in that** said contactless peripheral device is a keyboard.

8. The portable device (10) according to any one of the previous claims, in which said peripheral device can send a response to said portable object reader by using retro-modulation, through said flat coil (46), coupled to the main antenna (14) of said portable object.

9. The portable object (10) according to any one of the previous claims, in which said peripheral device is built into said portable object, said flat coil being in the same plane as said main antenna of said portable object.

10. The portable object according to any one of claims 1 to 9, in which said peripheral device can be removed from said portable object.

## Patentansprüche

1. Kontaktloser tragbarer Gegenstand (10), der einen Hauptchip (12) und eine Hauptantenne (14) aufweist, die die Verbindung zwischen dem Chip und einem dem kontaktlosen tragbaren Gegenstand zugeordneten Lesegerät ermöglicht, und der weiter mindestens eine kontaktlose Peripherievorrichtung (16, 18) aufweist, die eine andere Funktion als der Hauptchip hat und nicht durch ohmschen Kontakt mit diesem letzteren verbunden ist;
wobei der tragbare Gegenstand **dadurch gekennzeichnet ist, dass** die kontaktlose Peripherievorrichtung Energie und Daten mittels einer ebenen Wicklung (28, 32) empfängt, die als Sekundärteil eines Transformators dient, dessen Primärteil aus der Hauptantenne besteht, wenn letztere die Energie und Daten von einem Lesegerät des tragbaren Gegenstands durch elektromagnetische Kopplung empfängt.

2. Tragbarer Gegenstand (10) nach Anspruch 1, bei dem die von der Hauptantenne (14) übertragenen Daten vom Hauptchip (12) des tragbaren Gegenstands erzeugt werden.

3. Tragbarer Gegenstand (10) nach Anspruch 1 oder 2, bei dem die Peripherievorrichtung einen Abstimmungskondensator (38) enthält, der es ermöglicht, die Peripherievorrichtung mit einem Lesegerät zu koppeln.

4. Tragbarer Gegenstand (10) nach Anspruch 3, bei dem die Kopplung der Vorrichtung durch Kombination der Abstimmungskondensatoren der Peripherievorrichtung und des Hauptchips (12) erfolgt.

5. Tragbarer Gegenstand (10) nach einem der Ansprüche 1 bis 4, **dadurch gekennzeichnet, dass** die kontaktlose Peripherievorrichtung eine Anzeigevorrichtung (30) ist.

6. Tragbarer Gegenstand (10) nach einem der Ansprüche 1 bis 4, **dadurch gekennzeichnet, dass** die kontaktlose Peripherievorrichtung ein Zweitchip (26) ist.

7. Tragbarer Gegenstand (10) nach einem der Ansprüche 1 bis 4, **dadurch gekennzeichnet, dass** die kontaktlose Peripherievorrichtung eine Tastatur ist.

8. Tragbarer Gegenstand (10) nach einem der vorhergehenden Ansprüche, bei dem die Peripherievorrichtung eine Antwort an das Lesegerät eines tragbaren Gegenstands durch Rückmodulation über die ebene Wicklung (46) schicken kann, die mit der Hauptantenne (14) des tragbaren Gegenstands gekoppelt ist.

9. Tragbarer Gegenstand (10) nach einem der vorhergehenden Ansprüche, bei dem die Peripherievorrichtung in den tragbaren Gegenstand integriert ist, wobei die ebene Wicklung sich in der gleichen Ebene befindet wie die Hauptantenne (14) des tragbaren Gegenstands.

10. Tragbarer Gegenstand (10) nach einem der Ansprüche 1 bis 9, bei dem die Peripherievorrichtung vom tragbaren Gegenstand getrennt werden kann.
